# EUROPEAN PATENT APPLICATION

(11) **EP 4 564 699 A1**
(43) Date of publication of application: **04.06.2025**
(21) Application number: 23917068.1
(22) Date of filing: 22.09.2023
(51) Int. Cl.: H04B 7/06, H04B 17/373

(54) **INFORMATION SENDING METHOD, INFORMATION RECEIVING METHOD, COMMUNICATION DEVICE, AND STORAGE MEDIUM**

(30) Priority: 20.01.2023 CN 202310104801
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); LIU, Wenfeng, Shenzhen, Guangdong 518057 (CN); WANG, Yuxin, Shenzhen, Guangdong 518057 (CN)
(74) Representative: Savi, Massimiliano
(86) International application number: PCT/CN2023/120738
(87) International publication number: WO 2024/152600

(57) **Abstract**

Embodiments of the present application provide an information sending method, an information receiving method, a communication device, and a storage medium. The information sending method comprises: a first communication device acquiring M pieces of first-type channel state information, and determining N pieces of second-type channel state information according to the M pieces of first-type channel state information (S110); generating a channel state information report, the channel state information report comprising at least one of the following: L1 pieces of first-type channel state information and L2 pieces of second-type channel state information (S120), wherein the LI pieces of first-type channel state information is determined according to the M pieces of first-type channel state information, and the L2 pieces of second-type channel state information is determined according to the N pieces of second-type channel state information; and sending the channel state information report (S130).

## Description

### CROSS-REFERENCE TO RELATED APPLICATION

This application is based on and claims the priority of Chinese patent application No. 202310104801.1 filed on January 20, 2023, the disclosure of which is incorporated herein by reference in its entirety.

### TECHNICAL FIELD

The present disclosure relates to communication technology, and more particularly to an information sending method, an information receiving method, a communication device, and a storage medium.

### BACKGROUND

To improve spectral efficiency, abundant high-frequency spectrum resources can be utilized. However, the carrier frequency of high-frequency spectrum resources is high and the path loss is large. In order to solve this problem, beamforming technology can be employed to achieve high antenna gain to overcome the path loss. Moreover, selecting suitable beams for information transmission through beam scanning is an important technique in beam management. Generally, beam scanning involves only sending or receiving N beams, measuring channel state information corresponding to the N beams, and then selecting one or several beams as the preferred beams for information transmission based on the channel state information. In addition, multiple input multiple output (MIMO) technology is also a common technique to improve the performance of wireless communication systems. The acquisition of channel state information is also crucial for MIMO technology. There are two information processing modes for obtaining the preferred beams or channel state information for MIMO technology: a first information processing mode and a second information processing mode. The results obtained from the first information processing mode can be referred to as first-type channel state information, while the results from the second information processing mode can be referred to as second-type channel state information. Generally, the second information processing mode involves channel state information prediction, meaning the second information processing mode utilizes the channel state information corresponding to reference signal resources with actual transmission to predict the channel state information corresponding to reference signal resources without actual transmission. In contrast, the first information processing mode obtains channel state information solely based on reference signal resources with actual transmission. In practical implementation, designing the feedback content in such a way that allows monitoring of the performance of the second information processing mode based on this feedback content, in order to timely adjust the information processing mode, is a technical problem that needs to be researched and resolved now.

### SUMMARY

The present disclosure provides an information sending method, an information receiving method, a communication device, and a storage medium, for monitoring the performance of the second information processing mode and adjusting the information processing mode according to the transmitted content.

In accordance with a first aspect of the present disclosure, an embodiment provides an information sending method, which is applied to a first communication device, the method including:
acquiring M pieces of first-type channel state information, and determining N pieces of second-type channel state information according to the M pieces of first-type channel state information;
generating a channel state information report, the channel state information report including at least one of: L1 pieces of first-type channel state information, or L2 pieces of second-type channel state information, where the L1 pieces of first-type channel state information are determined according to the M pieces of first-type channel state information, the L2 pieces of second-type channel state information are determined according to the N pieces of second-type channel state information, where L1, L2, N, and M are positive integers, L1 is less than or equal to M, and L2 is less than or equal to N; and
sending the channel state information report.

In accordance with a second aspect of the present disclosure, an embodiment provides an information receiving method, which is applied to a second communication device, the method including:
receiving a channel state information report, the channel state information report including at least one of: L1 pieces of first-type channel state information, or L2 pieces of second-type channel state information;
where the L1 pieces of first-type channel state information are determined according to M pieces of first-type channel state information;
the L2 pieces of second-type channel state information are determined according to N pieces of second-type channel state information, and the N pieces of second-type channel state information are determined according to the M pieces of first-type channel state information; and
L1, L2, N, and M are positive integers, L1 is less than or equal to M, and L2 is less than or equal to N.

In accordance with a third aspect of the present disclosure, an embodiment provides a communication device, including:
at least one processor; and
at least one memory for storing at least one program, where
the at least one program, when executed by the at least one processor, causes the at least one processor to implement the information sending method of the first aspect, or the information receiving method of the second aspect.

In accordance with a fourth aspect of the present disclosure, an embodiment provides a computer-readable storage medium storing an executable program which, when executed by a processor, causes the processor to implement the information sending method of the first aspect, or the information receiving method of the second aspect.

In accordance with a fifth aspect of the present disclosure, an embodiment provides a computer program product storing program instructions which, when executed by a computer, cause the computer to implement the information sending method of the first aspect, or the information receiving method of the second aspect.

In an embodiment of the present disclosure, a first communication device acquires M pieces of first-type channel state information, and determines N pieces of second-type channel state information according to the M pieces of first-type channel state information; generates a channel state information report, the channel state information report including at least one of: L1 pieces of first-type channel state information, or L2 pieces of second-type channel state information, where the L1 pieces of first-type channel state information are determined according to the M pieces of first-type channel state information, the L2 pieces of second-type channel state information are determined according to the N pieces of second-type channel state information, where L1, L2, N, and M are positive integers, L1 is less than or equal to M, and L2 is less than or equal to N; and sends the channel state information report. In this way, the second communication device can determine the performance of the second information processing mode according to the content of the received channel state information report, thereby effectively monitoring the performance of the second information processing mode and making timely adjustments to the information processing mode.

### BRIEF DESCRIPTION OF DRAWINGS

FIG. 1 is a schematic architecture diagram of a communication system to which an embodiment of the present disclosure is applicable;
FIG. 2 is a flowchart of an information sending method according to an embodiment of the present disclosure;
FIG. 3 is a schematic diagram of processing first-type channel state information by a second information processing mode according to an embodiment of the present disclosure;
FIG. 4 is another schematic diagram of processing first-type channel state information by a second information processing mode according to an embodiment of the present disclosure;
FIG. 5 is a flowchart of an information receiving method according to an embodiment of the present disclosure; and
FIG. 6 is a schematic diagram of a communication device according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It should be understood that, in the description of the embodiments of the present disclosure, if "first" and "second", etc. are referred to, it is only for the purpose of distinguishing technical features, and shall not be understood as indicating or implying relative importance or implying the number of the indicated technical features or implying the sequence of the indicated technical features. "At least one" means one or more, and "a plurality of" means two or more. The term "and/or" describes an association relationship of associated objects, and represents that there may be three kinds of relationships. For example, A and/or B may represent three cases: only A exists, both A and B exist, and only B exists. A and B may be singular or plural. The character "/" generally indicates an "or" relationship between associated objects before and after the character. "At least one of" and a similar expression means any combination of the items, including a single item or any combination of a plurality of items. For example, at least one of a, b, or c may indicate a, b, c, a and b, a and c, b and c, or a, b, and c, where a, b, and c may be singular or plural.

Further, the technical features involved in various embodiments of the present disclosure described below may be combined with each other as long as they do not conflict with each other.

The receiving method and the sending method for reference signals according to embodiments of the present disclosure can be applied to various communication systems, such as at least one of the following systems: a Global System for Mobile Communications (GSM) or any other 2nd generation cellular communications system, a universal mobile telecommunications system (UMTS) based on basic wideband code division multiple access (W-CDMA), high-speed packet access (HSPA), Long-Term Evolution (LTE), advanced LTE, an IEEE 802.11-based system, an IEEE 802.15-based system and/or 5th generation (5G) mobile or cellular communications system; or a future mobile communications system. However, the embodiments are not limited to the example systems given above but may be other communications systems having necessary attributes to which the solution may be applied by those having ordinary skill in the art.

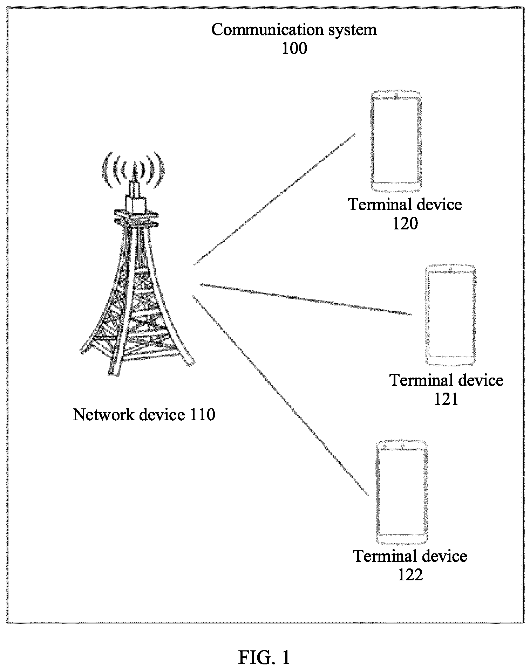

Now refer to FIG. 1. FIG. 1 is a schematic architecture diagram of a communication system to which an embodiment of the present disclosure is applicable. The communication system 100 in FIG. 1 includes a plurality of communication devices which can perform wireless communication with each other using air interface resources. Herein, the communication device includes at least one network device and at least one terminal device. In the example of FIG. 1, the network device includes a network device 110, and the terminal device includes a terminal device 120, a terminal device 121, and a terminal device 122. Wireless communication between the communication devices includes: wireless communication between a network device and a terminal device, wireless communication between network devices, or wireless communication between terminal devices.

The network device in the example of FIG. 1 may also be referred to as a base station, and the base station may be an Evolutional Node B (eNB or eNodeB) in Long Term Evolution (LTE) or Long Term Evolution Advanced (LTEA), a base station device in a 5G network, or a base station in a future communication system, etc. The base station may include various macro base stations, micro base stations, home base stations, remote radio unit, routers, Reconfigurable Intelligent Surfaces (RISs), Wireless Fidelity (WIFI) devices, and various network-side devices such as primary cells and secondary cells, and may also be a location management function (LMF) device, which is not limited in the embodiments of the present disclosure.

The terminal device in the example of FIG. 1 is a device with a radio transceiver function which may be deployed on land, including an indoor or outdoor device, a handheld device, a wearable device or a vehicle-mounted device; or may be deployed on water (e.g., on ships, etc.); or may be deployed in the air (e.g., on aircraft, balloons, satellites, etc.). The terminal device may be a mobile phone, a tablet computer (Pad), a computer with the radio transceiver function, a virtual reality (VR) terminal, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The application scenario is not limited in the embodiments of the present disclosure. The terminal device may sometimes be referred to as a user, a user equipment (UE), an access terminal, a UE unit, a UE station, a mobile radio station, a mobile station, a remote station, a remote terminal, a mobile device, a UE terminal, a radio communication device, a UE agent, or a UE apparatus, and the like, which is not limited in the embodiments of the present disclosure.

It should be understood that the communication system described above is for more clearly describing the technical schemes of the embodiments of the present disclosure, and do not constitute a limitation on the technical schemes provided by the embodiments of the present disclosure. Those skilled in the art will recognize that, as system architectures evolve and new service scenarios emerge, the technical schemes according to the embodiments of the present disclosure are equally applicable to similar communication systems.

It should be understood that wireless communication between communication devices includes reference signal transmission (including sending or receiving) between communication devices. When the reference signal is transmitted between communication devices, the device that receives the reference signal may be referred to as a receiving end device (in the embodiment of the present disclosure, the receiving end device is referred to as a first communication device), and the device that sends the reference signal may be referred to as a sending end device (in the embodiment of the present disclosure, the sending end device is referred to as a second communication device).

It should be understood that when the reference signal is transmitted in the downlink, the first communication device (receiving end device) is a terminal device, and the second communication device (sending end device) is a network device; when the reference signal is transmitted in the uplink, the first communication device (receiving end device) is a network device, and the second communication device (sending end device) is a terminal device; and in some other embodiments, the first communication device and the second communication device may also be both terminal devices or both network devices.

In the present disclosure, higher-layer signaling includes, but is not limited to, radio resource control (RRC), media access control control element (MAC CE), and physical layer signaling may be transmitted between a base station and a terminal, such as sending physical layer signaling on a physical downlink control channel (PDCCH) and sending physical layer signaling on a physical uplink control channel (PUCCH).

In the present disclosure, an indicator of various parameters may also be referred to as an index or an identifier (ID), which are completely equivalent concepts. For example, for a wireless system resource identifier, the wireless system resource includes but is not limited to one of the following: a reference signal resource, a reference signal resource group, a reference signal resource configuration, a channel state information (CSI) report, a CSI report set, a terminal device, a base station, a panel, a neural network, a sub-neural network, a neural network layer, a precoding matrix, a beam, a transmission mode, a sending mode, a receiving mode, a module, a model, a functional module, etc. The base station may indicate the identifier of one resource or a set of resources to the terminal device through various higher-layer signaling and/or physical layer signaling. The terminal device may feed back an identifier of one resource or a set of resources to the base station through various higher-layer signaling and/or physical layer signaling.

In some embodiments, artificial intelligence (AI) includes devices, components, software, and modules with self-learning such as machine learning (ML), deep learning, reinforcement learning, transfer learning, deep reinforcement learning, and meta-learning. In some embodiments, artificial intelligence is realized through artificial intelligence networks (also known as neural networks), which consist of multiple layers, each containing at least one node. In an example, the neural network includes an input layer, an output layer, and at least one hidden layer. Each layer of the neural network includes, but is not limited to, using at least one of a fully connected layer, a dense layer, a convolutional layer, a transposed convolutional layer, a skip connection layer, an activation function, a normalization layer, a pooling layer, etc. In some embodiments, each layer of the neural network may include a sub-neural network, such as a Residual Network block (ResNet block), DenseNet block, or Recurrent Neural Network (RNN). The artificial intelligence network can be implemented through a model, which may include a neural network model. The neural network model includes a structure of the neural network model and/or parameters of the neural network model. Here, the structure of the neural network model can be referred to as the model structure, and the parameters of the neural network model can be referred to as network parameters or model parameters. A model structure defines the number of layers in the neural network, the size of each layer, activation functions, connectivity, convolution kernels and their sizes, convolution strides, types of convolution (such as 1D convolution, 2D convolution, 3D convolution, dilated convolution, transposed convolution, depthwise convolution, grouped convolution, expanded convolution, etc.), and other architectural elements. The network parameters are the weights and/or biases of each layer in the neural network model and their corresponding values. A model structure can correspond to multiple sets of different parameter values for the neural network model to adapt to different scenarios. The neural network model parameters can be obtained through online training or offline training. For example, by inputting at least one sample and label, the neural network model can be trained to obtain the neural network model parameters.

In some examples, one sample includes N features and M labels, where N is a positive integer, and M is an integer greater than or equal to 0. Multiple samples constitute a dataset. In an example, one sample, such as a sample in supervised learning, includes one feature and one label. In an example, one sample, such as a sample in unsupervised learning, has only 1 feature and no label. In some examples, one sample includes multiple features and one label, such as in a supervised learning network model with multiple inputs and a single output. In some examples, one sample includes one feature and multiple labels, such as in a supervised learning network model with a single input and multiple outputs. In some examples, the feature can be represented as an array. In some examples, the label is also an array. Here, the array can be a vector, a matrix, or a tensor with more than two dimensions. Each element within the array can be a discrete value, a real number, a real value between 0 and 1, or a real value between -0.5 and 0.5.

In an example, normalization of the elements in the array corresponding to the label or feature is required to facilitate faster convergence of the network model. The so-called normalization refers to the process of scaling the values of the elements in an array to a range that is greater than or equal to a and less than or equal to b. In an example, a = -0.5, b = 0.5. In an example, a = 0, b = 1. In an example, the elements in the array are divided by the maximum absolute value among the elements in that array to achieve normalization. In an example, the elements in the array are divided by the variance of the elements in that array to achieve normalization. In an example, the elements in the array are divided by a fixed value (such as the maximum value of all elements across all samples) to achieve normalization. In an example, the elements in the array are divided by a statistical value (such as the statistical variance of all elements across all samples) to achieve normalization. For index values, such as beam index, CRI, SSBRI, etc., normalization may be achieved through one-hot encoding.

In some embodiments, the model refers to the data flow between the original input of the sample and the output target, which passes through multiple linear or nonlinear components. The so-called model includes neural network models, non-AI modules for processing information or their corresponding models, and functional components or functions that map input information to output information (where the mapping includes both linear and nonlinear mappings). In some embodiments, each model corresponds to a model indicator (Model ID) or model identity (Model ID). In some embodiments, the model identity may also have other equivalent names or concepts, including one of: model index, primary identifier, functional identifier, model indication, and so on.

In some examples, a model includes a model structure and model parameters. For example, the model is a neural network model, and the neural network model includes a neural network model structure and neural network model parameters, which are respectively used to describe the structure of the neural network and the parameter values of the neural network. One neural network model structure can correspond to multiple neural network model parameters, that is, the neural network model structure may be the same, but the values of the corresponding neural network model parameters may be different.

In some embodiments, the slot may be a slot or a sub-slot (mini slot). A slot or sub-slot includes at least one symbol. Here, the symbol refers to a time unit in a subframe or a frame or a time slot, and may be, for example, an Orthogonal Frequency Division Multiplexing (OFDM) symbol, a Single-Carrier Frequency Division Multiple Access (SC-FDMA) symbol, an Orthogonal Frequency Division Multiple Access (OFDMA) symbol, or the like.

In some embodiments, transmission includes sending or receiving, such as sending data or signals, and receiving data or signals.

In some embodiments, in order to calculate channel state information or perform channel estimation or the like, a base station or terminal device needs to transmit a reference signal (RS) including, but not limited to, a channel-state information reference signal (CSI-RS) including a zero-power CSI-RS (ZP CSI-RS) and a non-zero-power CSI-RS (NZP CSI-RS), a channel-state information interference measurement signal (CSI-IM), a sounding reference signal (SRS), a synchronization signals block (SSB), a physical broadcast channel (PBCH), and a synchronization signal block/physical broadcast channel (SSB/PBCH). NZP CSI-RS can be used to measure channels or interference, and CSI-RS can also be used for tracking, referred to as Tracking Reference Signal (CSI-RS for Tracking, TRS), while CSI-IM is generally used to measure interference, and SRS is used to measure uplink channels. Additionally, the set of resource elements (Resource Element, RE) used for transmitting reference signals in time-frequency resources is referred to as reference signal resources, such as CSI-RS resource, SRS resource, CSI-IM resource, and SSB resource. Herein, the SSB includes a synchronization signal block and/or a physical broadcast channel.

In some embodiments, in order to save signaling overhead and other resources, multiple reference signal resources may be divided into several sets (such as CSI-RS resource set, CSI-IM resource set, SRS resource set). Each reference signal resource set includes at least one reference signal resource. The multiple reference signal resource sets can originate from the same reference signal resource configuration (such as CSI-RS resource setting, SRS resource setting, where the CSI-RS resource setting may be combined with the CSI-IM resource setting, both referred to as CSI-RS resource setting) to configure parameter information.

In some embodiments, the base station configures measurement resource information, which is used to obtain channel state information. Here, the measurement resource information includes C_{N} pieces of channel measurement resource (CMR) information and/or C_{M} pieces of interference measurement resource (IMR) information, where C_{N} and C_{M} are positive integers. The base station configures the measurement resource information within a report configuration (report config) or reporting setting. In some examples, one channel measurement resource information includes at least one channel reference signal resource setting, such as at least one CSI-RS resource setting or at least one SRS resource setting, and one interference measurement resource information includes at least one interference reference signal resource setting, such as at least one CSI-IM resource setting. In some examples, one channel measurement resource information includes at least one channel reference signal resource set, such as at least one CSI-RS resource set or at least one SRS resource set, and one interference measurement resource information includes at least one interference reference signal resource set, such as at least one CSI-IM resource set. In some examples, one channel measurement resource information includes at least one channel reference signal resource, such as at least one CSI-RS resource or at least one SRS resource, and one interference measurement resource information includes at least one interference reference signal resource, such as at least one CSI-IM resource.

In some embodiments, a beam includes send beams, receive beams, and pairs of receive and send beams, as well as pairs of send and receive beams. In some embodiments, a beam can be understood as a type of resource, such as reference signal resources, transmit spatial filters, receive spatial filters, spatial filters, spatial receive parameters, transmit precoding, receive precoding, antenna ports, antenna weight vectors, and antenna weight matrices, among others. The beam index may be replaced with a resource index (e.g., a reference signal resource index) because the beam may be associated with certain time-frequency code resources for transmission purposes. The beam may also be a transmission (sending/receiving) mode; and the transmission mode may include spatial multiplexing, frequency domain/time domain diversity, and beamforming, among others. Furthermore, the base station may configure quasi co-location (QCL) for two reference signals and inform the user equipment to describe channel characteristic assumptions. The parameters involved in the quasi co-location at least include: Doppler spread, Doppler shift, delay spread, average delay, average gain, and spatial parameter (Spatial Rx parameter, or Spatial parameter). Here, the spatial parameters may include spatial receive parameters, angle information, spatial correlation of the receive beam, average delay, and the correlation of the time-frequency channel response (including phase information). The angle information may include at least one of: angle of arrival (AOA), angle of departure (AOD), zenith angle of departure (ZOD), or zenith angle of arrival (ZOA). The spatial filtering may be at least one of a DFT vector, a precoding vector, a DFT matrix, a precoding matrix, or a vector formed by a linear combination of a plurality of DFTs, or a vector formed by a linear combination of a plurality of precoding vectors. In some embodiments, the terms of vector can be used interchangeably. In some embodiments, a beam pair includes a combination of a send beam and a receive beam.

In some embodiments, the beam direction or the beam angle may include at least one of: angle of arrival (AOA), angle of departure (AOD), zenith angle of departure (ZOD), zenith angle of arrival (ZOA), a vector or vector index constructed from at least one of AOA, AOD, ZOD, or ZOA, discrete Fourier transformation (DFT) vector, codeword in a codebook, send beam index, receive beam index, send beam group index, or receive beam group index.

In some embodiments, particularly during high-frequency transmission, due to the higher carrier frequency and significant path loss, beamforming is required to concentrate the energy in the direction of the terminal device, necessitating beam management. Beam management includes, but is not limited to, aspects such as beam scanning, beam tracking, and beam recovery. The core issue to be addressed is how to obtain accurate beam pairs with as low control overhead as possible. Here, beam scanning includes send beam scanning and/or receive beam scanning. To reduce the overhead of beam scanning, a two-phase scanning approach can be employed. In some embodiments, beam training may include training in three phases: the first phase, the second phase, and the third phase. Here, in the first phase, both the send beams and the receive beams are scanned simultaneously; in the second phase of beam scanning, one receive beam is fixed while different send beams are scanned; and the third phase involves fixing one send beam and scanning different receive beams. In an example, by sending N_{T} beams while fixing the receive beam and setting the repetition parameter to off, the L1-RSRP or L1-SINR corresponding to the N_{T} beams is measured, and the beam parameter information corresponding to L beams is selected for reporting. In an example, by sending one beam and using N_{R} receive beams, with the repetition parameter set to on, the L1-RSRP or L1-SINR corresponding to the N_{R} beams is measured, and the beam parameter information corresponding to L beams is selected for reporting. When both N_{R} and N_{T} are large, the overhead is significantly high, necessitating a substantial reference signal overhead. Here, N_{R} and N_{T} are positive integers. By utilizing advanced beam prediction techniques, the reference signal overhead during beam scanning can be reduced. These advanced techniques may include AI or other existing and future non-AI technologies used for beam prediction. Here, beam prediction includes spatial beam prediction, temporal beam prediction, or space-time beam prediction.

In some examples, for spatial beam prediction, the input is an array of beam parameter information, which includes L0 pieces of beam parameter information. Based on the L0 pieces of beam parameter information, another array of beam information is predicted, which includes L1 pieces of beam parameter information. Here, the L1 pieces of beam parameter information may include the L0 pieces of beam parameter information. Here, L, L1, and L0 are all positive integers. In some examples, L0 ≤ L1, and they are all positive integers. The beams may be send beams, receive beams, or pairs of send and receive beams. Each beam may correspond to a beam direction. In some examples, spatial beam prediction can be achieved through AI modules, such as through a network model. The beam parameter information corresponding to L0 beams is combined to form a beam parameter information array (a first beam parameter information array) which is then input into the neural network. The neural network outputs an array of beam parameter information corresponding to L1 beams (a second beam parameter information array), and the indexes of L pieces of beam parameter information with the highest values in the second beam parameter information array are determined as the preferred beams. In some examples, the spatial beam prediction can also be achieved through non-AI methods, such as linear mapping, nonlinear mapping, or Wiener filtering. In some examples, the beams corresponding to the first beam parameter information array and the second beam parameter information array may be of different types. For example, the beam types may include wide beams, narrow beams, regular beams, irregular beams, and so on.

In some examples, for temporal beam prediction, N beam parameter information arrays are input, where each beam parameter information array includes L0 pieces of beam parameter information, and M second beam parameter information arrays are predicted according to the N first beam parameter information arrays. Here, each beam parameter information array of the M second beam parameter information arrays includes L1 pieces of beam parameter information. Here, N, M, L, L1, and L0 are all positive integers, and the beams may be send beams, receive beams, or pairs of send and receive beams. Each beam may correspond to a beam direction. Here, the N first beam parameter information arrays represent the beam parameter information prior to a reference time slot, while the M second beam parameter information arrays represent the beam parameter information after the reference time slot. In some examples, when L0 = L1, it is temporal beam prediction, and when L0 < L1, it is space-time beam prediction. In some examples, temporal beam prediction may be achieved through an AI module, such as by a network model. N beam parameter information arrays are input, where each beam parameter information array includes L0 pieces of beam parameter information. The N*L0 pieces of beam parameter information is then combined into a larger beam parameter information array (a first beam parameter information array) which is then input into the network model. The network model outputs M second beam parameter information arrays, where each second beam parameter information array includes L1 pieces of beam parameter information. The M*L1 pieces of beam parameter information can also be combined into a beam parameter information array (a second beam parameter information array). For each array of beam parameter information in the M arrays, the index(es) of the one or more pieces of beam parameter information with the highest values is/are determined as the preferred beam(s) for that beam information array. Herein, L1 is generally greater than or equal to L0, and both are positive integers. In some examples, the temporal beam prediction can also be achieved through non-AI methods, such as linear mapping or nonlinear mapping techniques.

In some examples, the neural network model parameters can be obtained through online training or offline training. For example, by inputting at least one sample and label, the neural network model can be trained to obtain its parameters. Here, the sample includes features and labels. In some examples, a feature is a first beam parameter information array, and the label is a second beam parameter information array. During network training, the first beam parameter information array and the second beam parameter information array have a corresponding relationship, preferably a one-to-one correspondence. During the deployment or testing phase of the network model, the first beam parameter information array is input into the network model to output a predicted second beam parameter information array. By comparing the predicted second beam parameter information array with the second beam parameter information array corresponding to the label, the prediction performance of the network can be assessed. Additionally, the loss function between the two can be used to train the neural network model to obtain its parameters.

In some examples, the send beam and/or receive beam indexes are numbered in an agreed manner to form beam indexes. Here, a beam index includes one of: a send beam index, a receive beam index, or a send and receive beam pair index. Each beam index corresponds to a beam direction, or to a vector or matrix associated with that beam direction. The terminal device receives reference signals (such as CSI-RS, SSB, etc.) and measures the beam parameter information corresponding to each beam, resulting in a beam parameter information array. Generally, the first beam parameter information array is a beam parameter information array formed from the beam parameter information corresponding to the first beam set, while the second beam parameter information array is a beam parameter information array formed from the beam parameter information corresponding to the second beam set. The first beam set is a subset of the second beam set. However, it can also include cases where the first beam set and the second beam set come from different beam sets, such as one being wide beams and the other being narrow beams.

In some examples, the beam parameter information array is a one-dimensional array, such as a vector. In some examples, the beam parameter information array is a two-dimensional array, such as a matrix. In some examples, the beam parameter information array is an array with more than two dimensions, such as a tensor. Here, vectors and matrices can also be considered as special cases of tensors.

In some embodiments, the beam parameter information includes at least one beam's Layer 1 Reference Signal Received Power (L1 RSRP or RSRP) and differential RSRP. In some embodiments, the beam parameter information includes at least one beam's Layer 1 Signal-to-Interference Noise Ratio (L1 SINR or SINR) and differential SINR. In some embodiments, the beam parameter information includes at least one beam's Reference Signal Received Quality (RSRQ) and differential RSRQ. In some embodiments, the beam parameter information is the beam angles corresponding to at least one beam (such as AOA, ZOA, AOD, ZOD, etc., which are sometimes referred to as horizontal angle of arrival, vertical angle of arrival, horizontal angle of departure, and vertical angle of departure). In some embodiments, the beam parameter information is the send beam index corresponding to at least one beam. In some embodiments, the beam parameter information is a receive beam index corresponding to at least one beam. In some embodiments, the beam parameter information is a send beam and a receive beam pair index corresponding to at least one beam (referred to as a beam pair index or a beam pair for short). In some embodiments, the beam parameter information is a beam domain receive power map (BDRPM) corresponding to at least one beam. In some embodiments, the beam parameter information is a channel state information reference signal resource indicator (CSI-RS Resource Indicator, CRI) corresponding to at least one beam. In some embodiments, the beam parameter information is a synchronization signals block resource indicator (SSBRI) or another reference signal resource indication, such as an SRSRI, corresponding to at least one beam. In some embodiments, the beam parameter information is a combination of at least two of the following beam parameter information corresponding to at least one beam: RSRP, RSRQ, SINR, beam angle, send beam index, receive beam index, beam pair index, CRI, SSBRI, etc. In some embodiments, the beam parameter information is a linear value of one of RSRP, RSRQ, and SINR. In some embodiments, the beam parameter information is the logarithmic value or decibel value (dB) of one of RSRP, RSRQ, or SINR.

In some embodiments, the beam parameter information is obtained based on CSI-RS measurements. In some embodiments, the beam parameter information is obtained based SSB measurements. In some embodiments, the beam parameter information is obtained based SRS measurements.

In some examples, in order to better transmit data or signals, the base station or terminal device needs to acquire measurement parameters, which may include channel state information or other parameters for characterizing the channel, where the channel state information may include at least one of: beam parameter information, channel quality indicator (CQI), precoding matrix indicator (PMI), layer indicator (LI), rank indicator (RI), or precoding information. The pre-coding information includes a first type of pre-coding information, such as codebook-based pre-coding information, where the pre-coding matrix indicator is one type of the codebook-based pre-coding information. The pre-coding information also includes methods that are not codebook-based, such as a second type of pre-coding information.

In some examples, in order to transmit channel state information, such as terminal feedback channel state information, the base station receives channel state information. In some examples, the beam parameter information is also a kind of channel state information, and needs to be transmitted in the transmission resource defined by the CSI report. In order to transmit channel state information, the terminal device and the base station define a CSI report (CSI report or CSI report congfig), where the CSI report defines at least one of the following parameters: resources for time-frequency feedback of CSI, the report quantity (reportQuantity) included in the CSI, the time-domain type (reportConfigType) fed back by the CSI, channel measurement resources, interference measurement resources, or information on the measurement bandwidth, etc. The CSI report can be transmitted on uplink transmission resources, which include PUSCH and PUCCH. The CSI report also includes temporal characteristics, including periodic CSI report (P-CSI), aperiodic CSI report (AP-CSI), and semi-persistent CSI report (SP-CSI). Generally, the number of bits transmitted for P-CSI is relatively small and is transmitted on PUCCH, while A-CSI typically has a larger number of bits and is usually transmitted on PUSCH. SP-CSI can be transmitted based on either PUSCH or PUCCH. Here, P-CSI transmitted via PUCCH is generally configured using higher-layer signaling (Radio Resource Control, RRC), and SP-CSI transmitted via PUCCH is also configured or activated using higher-layer signaling (RRC and/or MAC CE), while SP-CSI or A-CSI transmitted via PUSCH is triggered through physical layer signaling (Downlink Control Information, DCI), which is typically transmitted on the physical downlink control channel (PDCCH).

In some embodiments, the base station configures N_{C} CSI reports that need to be fed back to the base station via higher-layer signaling and/or physical layer signaling. Each CSI report has an identity (ID), referred to as CSI report ID. The terminal device can select M_{C} CSI reports from the N_{C} CSI reports based on its own computational or processing capability, as well as the requirements of the base station, and then feed back at least one CSI report from the M_{C} CSI reports based on the resources available for uplink feedback, where N_{C} and M_{C} are positive integers and M_{C} ≤ N_{C}. In an example, M_{C} CSI reports need to be fed back; however, at least two reports among these M_{C} reports have conflicting feedback resources. The conflict in feedback resources for the two reports means that at least one symbol and/or at least one subcarrier in the transmission resources used for feedback (such as PUCCH or PUSCH) corresponding to the two reports is the same.

In an embodiment of the present disclosure, the feedback of CSI may also be referred to as transmitting a CSI or sending a CSI, meaning that channel state information is carried on uplink transmission resources for feedback or transmission. Both the uplink transmission resource and the corresponding CSI are indicated by a channel state information report. In an example, transmitting a CSI report means transmitting the content indicated in the CSI report that needs to be transmitted, including but not limited to channel state information. Here, transmitting includes sending or receiving and can also be replaced with feeding back or receiving. In an example, transmitting a CSI report means transmitting the content indicated by the CSI report through uplink transmission resources, including but not limited to channel state information. Here, transmitting includes sending or receiving and can also be replaced with feeding back or receiving.

In some examples, the terminal device needs to provide feedback for multiple CSI reports, among which at least L CSI reports have conflicting transmission resources. The priority values (PVs) of the L conflicting CSI reports are calculated using a priority calculation formula. These priority values are then sorted in ascending order, and at least one CSI report with the lowest priority value is selected for transmission on the uplink resource.

In some embodiments, in some examples, the antenna is a physical antenna. In some examples, the antenna is a logical antenna. In some examples, the concepts of port and antenna can be interchangeable. In some examples, the antenna is a sending antenna. In some examples, the antenna is a receiving antenna. In some examples, the antenna includes an antenna pair of a sending antenna and a receiving antenna. In some examples, the antenna may be a uniform linear array. In some examples, the antenna is a uniform planar array (for instance, including N_{g} rows and M_{g} columns, where N_{g} and M_{g} are positive integers). In some examples, the antenna is a uniform circular array. In some examples, the antenna may be a non-uniform linear array. In some examples, the antenna is a non-uniform planar array. In some examples, the antenna is a non-uniform circular array. In some examples, the antenna is a directional antenna, while in some examples the antenna is an omni-directional antenna. In some examples, the antenna is a dual-polarized antenna. In some examples, the antenna is a single-polarized antenna.

In some embodiments, the base station sends a reference signal to the terminal device, which receives the reference signal and measures the reference signal to obtain beam parameter information. Based on the beam parameter information, the terminal device selects beams or the beam parameter information corresponding to the selected beams, providing feedback on the selected beam index and/or the corresponding beam parameter information. The selection of beams includes, but is not limited to, selecting K beams with the highest beam parameter information. In some embodiments, the process of selecting beams from the beam parameter information and/or the beam parameter information corresponding to the selected beams is also referred to as information processing. Of course, the concept of information processing is not limited to beam selection and prediction; it also includes extracting channel state information from channel information and predicting channel state information from channel information. The information processing modes include a first information processing mode and a second information processing mode, which can be referred to as a first processing mode and a second processing mode, respectively. In an example, the first information processing mode is a traditional beam scanning method that does not perform beam prediction, where acquisition of each piece of beam parameter information corresponds to an actual resource that has been transmitted. The second information processing mode involves beam prediction, including temporal beam prediction and/or spatial beam prediction. This beam prediction method can be based on AI models or non-AI models. In an example, the first information processing mode is a mode of acquiring channel state information based on transmission, while the second information processing mode is an information processing mode of predicting channel state information based on advanced techniques, including AI, etc. In some examples, the first information processing mode is a traditional mode for processing information, while the second information processing mode is an AI-based information processing mode. The result obtained from the first information processing mode is referred to as a first processing result, which can also be called first-type channel state information, including the selected beams obtained using the first information processing mode and/or the beam parameter information corresponding to the selected beams, as well as other channel state information. The result obtained from the second information processing mode is referred to as a second processing result, which can also be called second-type channel state information, including the selected beams obtained using the second information processing mode and/or the beam parameter information corresponding to the selected beams, as well as other channel state information. In some examples, the model used in the second information processing mode includes a first model and a second model. Here, the first model can refer to an existing, predefined, or default model, while the second model is an updated model or one that adapts to the current channel conditions.

In some examples, a model performance indicator can also be referred to as performance indicator, network performance indicator, or second information processing mode performance indicator. The indicator primarily assess the performance of the second information processing mode or whether the model corresponding to the second information processing mode is suitable for the current channel environment.

In some embodiments, the terminal device receives M reference signal resources, where each reference signal resource corresponds to a beam. The terminal device measures the M reference signal resources to obtain M pieces of channel state information, such as M L1-RSRPs, M L1-SINRs, M pieces of angle information, or other channel state information, where M is a positive integer. The terminal device processes the M pieces of channel state information using the first information processing mode to obtain the first processing result, or using the second information processing mode to obtain the second processing result. From the first processing result or the second processing result, L preferred beams or the beam parameter information corresponding to the preferred beams are obtained. L1 pieces of first-type channel state information and/or L2 pieces of second-type channel state information are fed back. The base station receives the L1 pieces of first-type channel state information and/or L2 pieces of second-type channel state information fed back by the terminal device, and selects at least one beam or channel state information from the L1 pieces of first-type channel state information and/or L2 pieces of second-type channel state information for data or signal transmission. The base station can also determine the performance corresponding to the second processing mode based on the L1 pieces of first-type channel state information and/or L2 pieces of second-type channel state information fed back by the terminal device, such as the model performance indicator used in the second processing mode. If the performance corresponding to the second processing mode is poor, the base station may instruct the terminal device to update the model or switch to the first information processing mode for information processing. Some examples or embodiments below are based on this assumption.

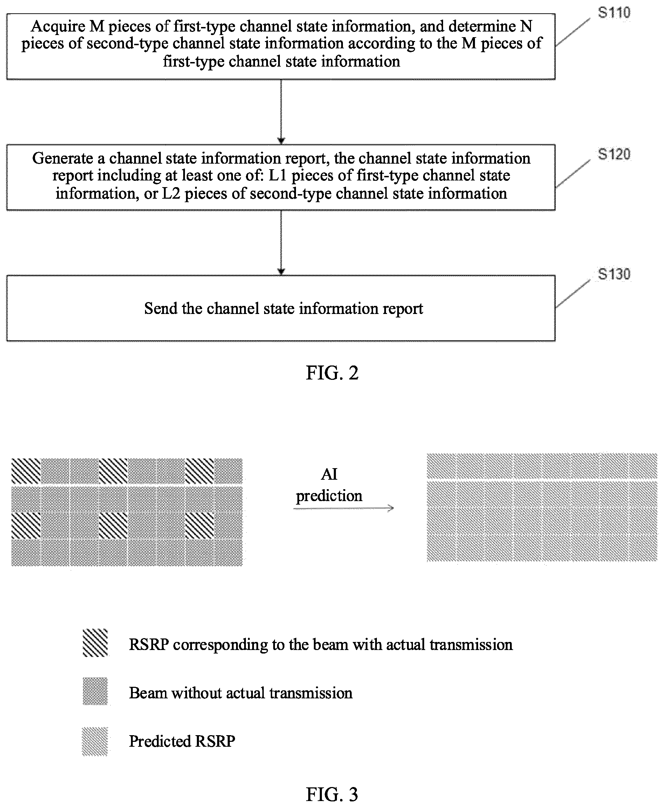

Now refer to FIG. 2. FIG. 2 is a flowchart of an information sending method according to an embodiment of the present disclosure. The method is applied to a first communication device, and includes, but is not limited to, the following steps.

At S110, M pieces of first-type channel state information are acquired, and N pieces of second-type channel state information are determined according to the M pieces of first-type channel state information.

It can be understood that the channel state information described in the embodiments of the present disclosure includes resource indexes and/or a resource metric parameters. For example, the resource index, also referred to as the reference resource index, can be any of CRI, SSBRI, SRSRI, beam index, etc. The resource metric parameters can be beam parameter information, such as L1-RSRP, L1-SINR, differential RSRP, differential SINR, RSRQ, CQI, etc. The above-mentioned M pieces of first-type channel state information can be obtained by the first communication device measuring pilot signals.

It can also be understood that the first-type channel state information described in the embodiments of the present disclosure represents channel state information acquired using the first information processing mode, i.e., the first-type channel state information is channel state information determined in resources with actual transmission. The second-type channel state information represents channel state information acquired using the second information processing mode, i.e., the second-type channel state information is channel state information determined through prediction. In other words, according to the embodiment of the present disclosure, after obtaining M pieces of first-type channel state information, the M first-type channel state information are processed using the second information processing mode to derive N pieces of second-type channel state information.

At S120, a channel state information report is generated, the channel state information report including at least one of: L1 pieces of first-type channel state information, or L2 pieces of second-type channel state information.

Herein, the L1 pieces of first-type channel state information are determined according to the M pieces of first-type channel state information, for example, the L1 pieces of first-type channel state information are selected from the M pieces of first-type channel state information. The L2 pieces of second-type channel state information are determined based on the N pieces of second-type channel state information, for instance, by selecting L2 pieces of second-type channel state information from the N pieces of second-type channel state information, or by processing the N pieces of second-type channel state information to obtain some new L2 pieces of second-type channel state information. L1, L2, N, and M are positive integers, L1 is less than or equal to M, and L2 is less than or equal to N.

At S130, the channel state information report is sent.

It can be understood that the L1 pieces of first-type channel state information and/or the L2 pieces of second-type channel state information are used to acquire a model performance indicator. The first communication device sends the channel state information report to the second communication device, allowing the second communication device to acquire the model performance indicator based on the content of the channel state information report, thus enabling better monitoring of the performance of the model and timely adjustments to the information processing mode.

It should be noted that the channel state information report is transmitted to the second communication device via uplink transmission resources.

In an example, the first communication device is a terminal device and the second communication device is a base station. The terminal device obtains M pieces of beam parameter information from the base station and then processes the M pieces of beam parameter information using the first information processing mode, for example: the terminal device compares the sizes of the M pieces of beam parameter information, selecting the beams corresponding to L1 pieces of beam parameter information as preferred beams. For example, the beams corresponding to the largest L1 pieces of beam parameter information from the M pieces of beam parameter information may be selected as the preferred beams. The terminal device then feeds back the beam indexes of the L1 preferred beams and/or the beam parameter information corresponding to the L1 preferred beams in a CSI report, which is sent to the base station via uplink transmission resources.

In an example, the first communication device is a terminal device and the second communication device is a base station. The terminal device obtains M pieces of beam parameter information from the base station and then processes the M pieces of beam parameter information using the second information processing mode to derive N pieces of beam parameter information. For instance, this can be done using artificial intelligence to predict N pieces of beam parameter information from the M pieces of beam parameter information. Next, the terminal device compares the magnitudes of the N pieces of beam parameter information and selects the beams corresponding to the largest L2 pieces of beam parameter information from the N pieces of beam parameter information as the preferred beams. The terminal device then feeds back the indexes of the L2 preferred beams and/or the beam parameter information corresponding to the L2 preferred beams in a CSI report, which is sent to the base station via uplink transmission resources.

It should be noted that M is generally less than or equal to N; however, in scenarios involving temporal beam prediction, M may be greater than N. Therefore, the present disclosure does not impose restrictions on the magnitude relationship between M and N.

In a possible implementation, the first-type channel state information corresponds to a first reference signal resource set; and the second-type channel state information corresponds to a second reference signal resource set.

The first reference signal resource set includes at least M reference signal resources (such as CSI-RS resources, SSB resources, SRS resources), while the second reference signal resource set includes at least N reference signal resources (such as CSI-RS resources, SSB resources, SRS resources). Generally, N is greater than or equal to M. In some examples, some reference signal resources in the second reference signal resource set may not have actual transmission. In some examples, the first reference signal resource set is a subset of the second reference signal resource set. Each reference signal resource corresponds to a beam or pre-code, etc.

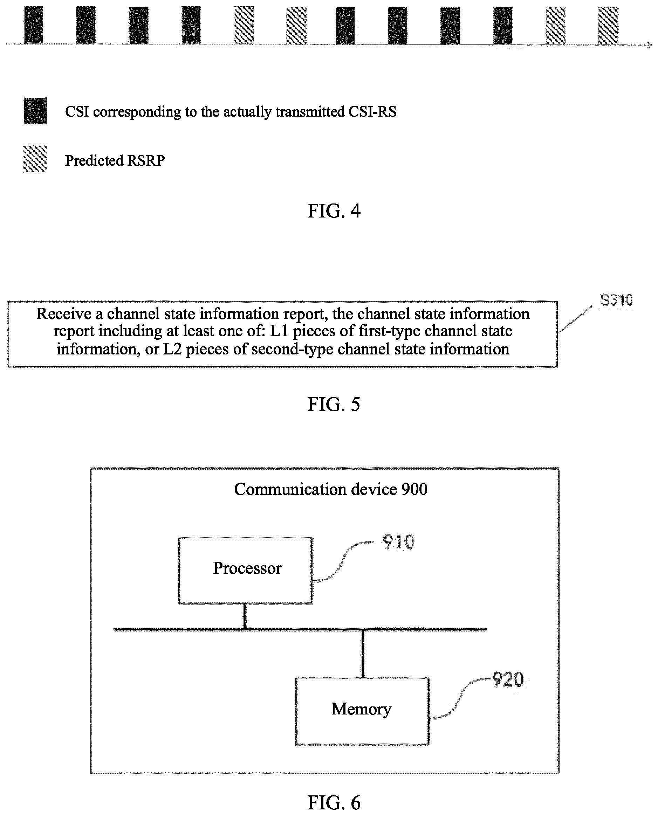

For example, as shown in FIG. 3, the first reference signal resource set consists of the reference signal resources corresponding to the beams with actual transmission, based on which the first-type channel state information is obtained. Based on the first-type channel state information, predictions are made to obtain the predicted channel state information (also referred to as second-type channel state information). As shown in FIG. 4, the first reference signal resource set consists of the actual transmitted CSI-RS, based on which the corresponding first-type channel state information is obtained. Based on the first-type channel state information, predictions are made to obtain the predicted channel state information (also referred to as second-type channel state information) corresponding to other time slots (time slots without actual transmission).

It can be understood that the model performance indicator here is used to indicate the performance of the channel state prediction model, which is used to predict the N pieces of second-type channel state information based on the M pieces of first-type channel state information.

In a possible implementation, the channel state information report includes a first field for indicating a channel state information type, where the channel state information type includes first-type channel state information and second-type channel state information.

For example, the first field taking a first value A1 indicates that the channel state information transmitted in the channel state information report is the first-type channel state information; or the first field taking a second value A2 indicates that the channel state information transmitted in the channel state information report is the second-type channel state information. In some examples, the first field taking a third value A3 indicates that the channel state information transmitted in the channel state information report is the first-type channel state information and second-type channel state information. For example, the terminal device includes the RSRP corresponding to the preferred beams in the CSI report. This CSI report has a first field that indicates the type of the channel state information being transmitted. When the value of the first field is A1, it indicates that the RSRP carried in the CSI report is the RSRP received during actual transmission. When the value of the first field is A2, it indicates that the RSRP carried in the CSI report is the RSRP obtained through AI prediction. Here, the first value A1, the second value A2, or the third value A3 can be integers or Boolean values.

In a possible implementation, the channel state information report includes a second field for sending K confidence levels.

In another possible implementation, the L2 pieces of second-type channel state information include K confidence levels.

It should be noted that the K confidence levels are used to determine a channel state information type and/or a model performance indicator. K is an integer that is not greater than L2.

For example, when K is equal to 1, it indicates the confidence level of the output result of the second information processing mode corresponding to the L2 pieces of second-type channel state information. Alternatively, when K is equal to L2, the second field carries L2 confidence levels, with each of these L2 confidence levels corresponding one-to-one to the L2 pieces of second-type channel state information, indicating the accuracy probability for each of the L2 pieces of second-type channel state information.

It can be understood that when K confidence levels are used to determine the type of channel state information, it includes: when at least L3 confidence levels of the K confidence levels are less than a preset confidence threshold, determining the channel state information transmitted in the uplink resources as first-type channel state information; or, when at least L4 confidence levels of the K confidence levels are greater than a preset confidence threshold, determining the channel state information transmitted in the uplink resources as second-type channel state information. Here, L3 is a positive integer less than K, and L4 is a positive integer less than or equal to K.

It can be understood that when K confidence levels are used to obtain the model performance indicator, it includes: when at least L3 confidence levels of the K confidence levels are less than a preset confidence threshold, determining that the network performance indicator takes a first value B1; or when at least L4 confidence levels of the K confidence levels are greater than a preset confidence threshold, determining that the network performance indicator takes a second value B2. Here, L3 is a positive integer less than K, and L4 is a positive integer less than or equal to K.

In an example, the base station determines whether the terminal device can use the second information processing mode based on the K pieces of confidence information from at least one CSI report. For example, if multiple pieces of confidence information are less than a preset threshold, it is concluded that the terminal device is not suitable for using the second information processing mode, indicating that the model corresponding to the current second information processing mode is not appropriate for the current scenario and a model update process is required. Otherwise, it is considered that the model corresponding to the second information processing mode of the terminal device is suitable for the current scenario and can continue to be used. In an example, as long as the base station does not instruct the terminal device to update the processing mode, the second processing result from the second information processing mode is reported.

In some embodiments, the method of an embodiment of the present disclosure further includes: dividing a transmission resource corresponding to first channel state information into a first sub-transmission resource and a second sub-transmission resource; and transmitting a model performance indicator on the first sub-transmission resource, and/or transmitting the first channel state information on the second sub-transmission resource.

The first channel state information includes one of:
the channel state information with the smallest value or the smallest confidence level among the L1 pieces of first-type channel state information;
the channel state information with the smallest value or the smallest confidence level among the L2 pieces of second-type channel state information; or
the channel state information with the smallest value or the smallest confidence level among the L1 pieces of first-type channel state information and the L2 pieces of second-type channel state information.

In an embodiment, the transmission resource corresponding to the channel state information with the minimum value is divided into two parts: a first transmission sub-resource and a second transmission sub-resource. The model performance indicator is transmitted on the first transmission sub-resource, while the channel state information with the minimum value is transmitted on the second transmission sub-resource.

In a possible implementation, the channel state information report includes a third field for sending the number of reference signal resource indexes having the same values in the L2 pieces of second-type channel state information and the M pieces of first-type channel state information.

In an embodiment, the number of reference signal resource indexes having the same values in the L2 pieces of second-type channel state information and the M pieces of first-type channel state information is represented by a third value C. That is, the third value C is transmitted in the CSI report to indicate the model performance indicator by the third value C, so that the second communication device determines the model performance indicator according to the third value C after receiving the CSI report.

For example, the third value C is used to obtain the model performance indicator, including one of the following cases.

In a first case, when the third value C is greater than the preset threshold PO, the model performance indicator takes the first value B1; otherwise, it takes the second value B2. Here, the first value B1 indicates that the model performance meets the performance requirements, while the second value B2 indicates that the model performance does not meet the performance requirements. In other words, when C > P0, it is determined that the model corresponding to the second information processing mode meets the performance requirements; when C ≤ P0, it is determined that the model does not meet the performance requirements.

In a second case, when the ratio of C to L2 is greater than the preset threshold P1, the model performance indicator is determined to take the first value B1; otherwise, it takes the second value B2. In other words, when C/L2 > P1, it is determined that the model corresponding to the second information processing mode meets the performance requirements; when C/L2 ≤ P1, it is determined that the model does not meet the performance requirements.

In a third case, when the ratio of C to M is greater than the preset threshold P2, the model performance indicator is determined to take the first value B1; otherwise, it takes the second value B2. In other words, when C/M > P2, it is determined that the model corresponding to the second information processing mode meets the performance requirements; when C/M ≤ P2, it is determined that the model does not meet the performance requirements.

In a possible implementation, the L2 pieces of second-type channel state information are used to obtain model performance indicators, including at least one of: setting K1 first special values and (L2 - K1) reference signal resource indexes in the L2 pieces of channel state information, where, when K1 ≥ 1, it indicates that the model performance indicator takes the first value A1, otherwise, it indicates that the model performance indicator takes the second value A2; or, setting K2 second special values and (L2 - K2) channel metric information in the L2 pieces of channel state information, where, when K2 ≥ 1, it indicates that the model performance indicator takes the first value A1, otherwise, it indicates that the model performance indicator takes the second value A2.

In an embodiment of the present disclosure, L1 and L2 are positive integers, and L1 is not equal to L2.

In an embodiment, the terminal device simultaneously feeds back a first CSI report and a second CSI report in the uplink transmission resources, where the first CSI report feeds back L1 pieces of first-type channel state information, and the second CSI report feeds back L2 pieces of second-type channel state information. The values of L1 and L2 can be equal or unequal.

It can be understood that the uplink transmission resource or the CSI report feeds back one of the following:
L1 pieces of first-type channel state information;
L2 pieces of second-type channel state information;
L1 pieces of first-type channel state information and L2 pieces of second-type channel state information;
the L1 pieces of first channel state information and the L2 pieces of second channel state information selected based on a first rule;
L1 pieces of channel state information and L2 pieces of second channel state information, where the second channel state information is second indication information; or
L2 pieces of second channel state information, where the second channel state information is second indication information.

According to an embodiment of the present disclosure, the L1 pieces of first channel state information and the L2 pieces of second channel state information are selected based on a first rule, where the first rule is a selection rule for CSI, for example, selecting L pieces of CSI at equal intervals from N pieces of CSI, selecting the L pieces of CSI with the highest L1-RSRP from N pieces of CSI, selecting the L pieces of CSI with the highest L1-SINR from N pieces of CSI, selecting L pieces of CSI from N pieces of CSI based on predefined indexes, or selecting L pieces of CSI from N pieces of CSI at equal intervals according to a first dimension index and/or a second dimension index. Here, CSI can be replaced with beams. The first dimension and the second dimension can refer to horizontal and vertical directions, respectively, can represent the horizontal and vertical dimensions of a planar antenna, rows or columns, or the horizontal beam indexes and vertical beam indexes in a planar array.

In some possible embodiments, the channel state information report includes second indication information.

Here, the second indication information is obtained by one of:
a first mode: determining the second indication information according to resource indexes corresponding to the L1 pieces of first-type channel state information and the L2 pieces of second-type channel state information; or
a second mode: determining the second indication information according to resource metric parameters corresponding to the L1 pieces of first-type channel state information and the L2 pieces of second-type channel state information.

For the first mode, it may include: when the resource indexes of the i-th of the L1 pieces of first-type channel state information and the i-th of the L2 pieces of second-type channel state information have the same resource index, determining that the i-th second indication information takes a first value D1, otherwise takes a second value D2. Here, i = 1, ..., L1.

For the second mode, it may include: when an absolute value of the difference between the resource metric parameters of the i-th of the L1 pieces of first-type channel state information and the i-th of the L2 pieces of second-type channel state information is less than a preset threshold value T1, determining that the i-th second indication information takes a first value D1, otherwise takes a second value D2. Here, i = 1, ..., L1.

In some possible embodiments, the L2 pieces of second-type channel state information in the channel state information report are R groups of second-type channel state information, where the R groups of second-type channel state information correspond to R time slots, R being an integer greater than 1 and less than or equal to L2.

In some possible embodiments, the L2 pieces of second-type channel state information in the channel state information report are R groups of second-type channel state information, where the R groups of second-type channel state information correspond to R coded blocks, R being an integer greater than 1 and less than or equal to L2. For example, the L2 pieces of second-type channel state information are divided into R groups of second-type channel state information in the order time slots, the R groups of second-type channel state information are encoded into R coded blocks, and the R coded blocks are transmitted in the channel state information report.

The method of an embodiment of the present disclosure may further include: adjusting the priority of the channel state information report. For example, the CSI report including the R groups of second channel state information is adjusted to have the highest priority, or the priority value is set to the minimum value, or the priority value is subtracted by an offset, or the priority value is added by an offset.

In a possible implementation, the channel state information CSI report that includes the R groups of second-type channel state information is assigned the highest priority to ensure that it can be transmitted first in case of conflicts with other reports. The R groups of second-type channel state information are then transmitted in the uplink transmission resource.

In an example, N is greater than M, and the M pieces of first-type channel state information include M resource indexes. The M pieces of first-type channel state information are the M resource indexes selected from the N resource indexes, with the resource metric parameters corresponding to the M resource indexes serving as the input to the channel state prediction model. For example, there are multiple terminal devices, and each terminal may require different M pieces of RSRP due to varying models. For instance, some terminal devices may need RSRP from the 1st to the M-th, while others may require RSRP from the 2nd to the (M+1)-th, etc. Therefore, it is necessary for each terminal device to inform the base station of the reference signal resource indexes suitable for its own model, and the base station will then send the reference signals corresponding to these specific reference signal resource indexes. The terminal device receives these signals and performs measurements to obtain M pieces of RSRP, which are used as input for the model to predict the N resource metric parameters suitable for that terminal device. From these N parameters, L2 pieces are selected for feedback.

The method of an embodiment of the present disclosure may further include: determining M reference signal resource indexes among N reference signal resource indexes, and transmitting the M reference signal resource indexes in the uplink transmission resource.

In a possible implementation, the number of retransmissions of a reference signal resource or the number of receive beams is also fed back in the channel state information report, for example, the number of retransmissions of the reference signal resource by the base station, and the number of beams received by the terminal device.

Referring to FIG. 5, an embodiment of the present disclosure further provides an information receiving method, which is applied to a second communication device, the method including following step.

At S310, a channel state information report is received, the channel state information report including at least one of: L1 pieces of first-type channel state information, or L2 pieces of second-type channel state information, where the L1 pieces of first-type channel state information are determined according to M pieces of first-type channel state information; the L2 pieces of second-type channel state information are determined according to N pieces of second-type channel state information, and the N pieces of second-type channel state information are determined according to the M pieces of first-type channel state information; and L1, L2, N, and M are positive integers, L1 is less than or equal to M, and L2 is less than or equal to N.

It can be understood that the second communication device acquires the performance indicator according to the received channel state information report. For example, the second communication device acquires a model performance indicator according to at least one of the L1 pieces of first-type channel state information and/or the L2 pieces of second-type channel state information.

For example, the channel state information report includes a first field for indicating a channel state information type, where the channel state information type includes first-type channel state information and second-type channel state information.

For example, the first field taking a first value A1 indicates that the channel state information transmitted in the channel state information report is the first-type channel state information; or the first field taking a second value A2 indicates that the channel state information transmitted in the channel state information report is the second-type channel state information. In some examples, the first field taking a third value A3 indicates that the channel state information transmitted in the channel state information report is the first-type channel state information and second-type channel state information. Here, the first value A1, the second value A2, or the third value A3 can be integers or Boolean values.

For example, the channel state information report includes a second field for receiving K confidence levels. or the L2 pieces of second-type channel state information include K confidence levels, K being an integer not greater than L2.

For example, the K confidence levels are used to determine a channel state information type and/or a model performance indicator.

For example, the channel state information report includes a third field for receiving the number of reference signal resource indexes having the same values in the L2 pieces of second-type channel state information and the M pieces of first-type channel state information.

For example, the transmission resource corresponding to the first channel state information in the channel state information report includes a first transmission sub-resource and a second transmission sub-resource, and a performance indicator is received according to the first transmission sub-resource, and/or the first channel state information is received according to the second transmission sub-resource.

For example, the first channel state information includes one of:
the channel state information with the smallest value or the smallest confidence level among the L1 pieces of first-type channel state information;
the channel state information with the smallest value or the smallest confidence level among the L2 pieces of second-type channel state information; or
the channel state information with the smallest value or the smallest confidence level among the L1 pieces of first-type channel state information and the L2 pieces of second-type channel state information.

For example, L1 and L2 are positive integers, and L1 is not equal to L2.

For example, the channel state information report includes second indication information, where the second indication information is obtained by one of:
determining the second indication information according to resource indexes corresponding to the L1 pieces of first-type channel state information and the L2 pieces of second-type channel state information;
   or
determining the second indication information according to resource metric parameters corresponding to the L1 pieces of first-type channel state information and the L2 pieces of second-type channel state information.

For example, the L2 pieces of second-type channel state information are R groups of second-type channel state information, where the R groups of second-type channel state information correspond to R time slots, R being an integer greater than 1 and less than or equal to L2.

For example, the L2 pieces of second-type channel state information are R groups of second-type channel state information, where the R groups of second-type channel state information correspond to R coded blocks, R being an integer greater than 1 and less than or equal to L2.

For example, according to a further embodiment of the present disclosure, M reference signal resource indexes are received according to the channel state information report, where the M reference signal resource indexes are based on N reference signal resource indexes.

For example, according to a further embodiment of the present disclosure, the number of retransmissions of a reference signal resource or the number of receive beams is received according to the channel state information report.

Hereinafter, the information sending/receiving method provided by the embodiments of the present disclosure will be described with reference to examples.

In an example, the terminal device processes M pieces of beam parameter information using the first information processing mode, such as comparing the magnitudes of the M pieces of beam parameter information and selecting the beams corresponding to L pieces of beam parameter information as preferred beams, for instance, selecting the beams corresponding to the largest L pieces of beam parameter information as the preferred beams. The terminal then feeds back, in a CSI report, the indexes of the L preferred beams and/or the beam parameter information corresponding to the L preferred beams. Moreover, a first field is included in the CSI report, where the first field takes a first value A1, indicating that the terminal device has fed back a processing result of the first information processing mode, that is, the beam parameter information is the beam parameter information of the beams with actual transmission. The base station receives the CSI report, determines indexes of the L preferred beams and/or beam parameter information corresponding to the L preferred beams fed back by the terminal device according to the CSI report, and determines that the terminal device has fed back the first processing result according to the value of the first field being the first value A1. Furthermore, based on statistical analysis, if the number of times the terminal device reports the first processing result exceeds a certain preset threshold, it is concluded that the terminal device is not suitable for using the second information processing mode, indicating that the model corresponding to the current second information processing mode is not appropriate for the current scenario and requires a model update process. Here, L is less than M, and L and M are positive integers. In an example, the terminal device processes the M pieces of beam parameter information using the second information processing mode to derive N pieces of beam parameter information. For instance, this can be done using artificial intelligence to predict N pieces of beam parameter information from the M pieces of beam parameter information. Next, the terminal device compares the magnitudes of the N pieces of beam parameter information and selects the beams corresponding to the largest L pieces of beam parameter information as the preferred beams. The terminal device then feeds back the indexes of the L preferred beams and/or the beam parameter information corresponding to the L preferred beams in a CSI report. Moreover, a first field is included in the CSI report, where the first field takes a second value A2, indicating that the terminal device has fed back a processing result of the second information processing mode, that is, the beam parameter information is predicted beam parameter information. The base station receives the CSI report, determines indexes of the L preferred beams and/or beam parameter information corresponding to the L preferred beams fed back by the terminal device according to the CSI report, and determines that the terminal device has fed back the second processing result according to the value of the first field being the second value A2. It is indicated that the model corresponding to the current second information processing mode is suitable for the current scenario and no model update process is required. Here, N, M, and L are positive integers, and L is equal to or less than N. In some examples, N is greater than M, indicating that the beam parameter information in all beam sets is obtained as a result of the second processing. In some examples, N is less than or equal to M, indicating that the second information processing mode only obtains the beam parameter information of N beams that it considers to be preferred.

In an example, the terminal device processes M pieces of beam parameter information through the second information processing mode to obtain N pieces of beam parameter information and K pieces of confidence information. Here, the K pieces of confidence information are used to indicate the reliability, accuracy, or probability of the N pieces of beam parameter information obtained by the second information processing mode. N pieces of beam parameter information and K pieces of confidence information are obtained through prediction by artificial intelligence using M pieces of beam parameter information. The beams corresponding to L pieces of beam parameter information are selected as the preferred beams. For example, the terminal device compares the magnitudes of the N pieces of beam parameter information and selects the beams corresponding to the largest L pieces of beam parameter information as the preferred beams. The terminal device then feeds back the indexes of the L preferred beams and/or the beam parameter information corresponding to the L preferred beams in a CSI report. In an example, the CSI report of the terminal device includes a second field for carrying the K pieces of confidence information. The base station receives the CSI report, obtains indexes of L preferred beams and/or beam parameter information corresponding to L preferred beams according to the CSI report, and obtains the K pieces of confidence information through the second field. The base station determines whether the terminal device can use the second information processing mode based on the K pieces of confidence information from at least one CSI report. For example, if multiple pieces of confidence information are less than a preset threshold, it is concluded that the terminal device is not suitable for using the second information processing mode, indicating that the model corresponding to the current second information processing mode is not appropriate for the current scenario and a model update process is required. Otherwise, it is considered that the model corresponding to the second information processing mode of the terminal device is suitable for the current scenario and can continue to be used. Here, L, M, N, and K are positive integers, L is less than or equal to N, and K may take a value of 1 or N. In an example, as long as the base station does not instruct the terminal device to update the processing mode, the second processing result from the second information processing mode is reported.

In an example, the terminal device processes M pieces of beam parameter information through the second information processing mode to obtain N pieces of beam parameter information. Here, M pieces of beam parameter information correspond to a first beam set, N pieces of beam parameter information correspond to a second beam set, and the first beam set belongs to a subset of the second beam set. N pieces of beam parameter information are obtained through prediction by artificial intelligence using M pieces of beam parameter information. The beams corresponding to L pieces of beam parameter information are selected as the preferred beams. For example, the terminal device compares the magnitudes of the N pieces of beam parameter information and selects the beams corresponding to the largest L pieces of beam parameter information as the preferred beams. The terminal device then feeds back the indexes of the L preferred beams and/or the beam parameter information corresponding to the L preferred beams in a CSI report. In an example, among the L preferred beam indexes and the M beam indexes, at least C indexes have the same value, that is, among the L preferred beams provided in feedback, C beams correspond to the beams with actual transmission, indicating that there are corresponding reference signal resources transmission. In an example, the terminal device or the base station determines according to the value of C whether the model corresponding to the second information processing mode meets the performance requirements. For instance, if C is greater than the threshold C0, it is indicated that the current model corresponding to the second information processing mode does not meet performance requirements; otherwise, it does. In an example, the terminal device or the base station determines according to the relationship between C and L whether the model corresponding to the second information processing mode meets the performance requirements. For instance, if the value of C divided by L exceeds the threshold C1, it is indicated that the current model corresponding to the second information processing mode does not meet performance requirements; otherwise, it does. In an example, the terminal device alternatively determines according to the relationship between C and M whether the model corresponding to the second information processing mode meets the performance requirements. For instance, if the value of C divided by M exceeds the threshold C2, it is indicated that the current model corresponding to the second information processing mode does not meet performance requirements; otherwise, it does. When the model corresponding to the second information processing mode does not satisfy the performance requirements, it is necessary to start the model update process, otherwise, the current model continues to be used for information processing. In an example, the determination of whether the model corresponding to the second information processing mode meets the performance requirements is made at the base station. If the base station determines that the model corresponding to the second information processing mode does not meet the performance requirements, the base station will indicate to the terminal device to use a new model through signaling, or will activate a set of models via signaling for the terminal device to choose a new model. In an example, the determination of whether the model corresponding to the second information processing mode meets the performance requirements is made at the terminal device. The terminal device indicates to the base station to initiate the model update process through physical layer or higher layer signaling. Alternatively, a model identifier may be carried to inform the terminal device of the model it recommends using. In an example, the terminal device compares the beam parameter information among C beams and modifies a field of the transmission resource corresponding to the beam with the minimum parameter information, for instance, modifying at least 1 bit. This field is used to indicate whether the model corresponding to the second information processing mode meets the performance requirements. For instance, when the field takes the first value B1, it is indicated that the model corresponding to the second information processing mode does not meet the performance requirements, prompting the base station to initiate the model update process. When the field takes the second value B2, it is indicated that the model corresponding to the second information processing mode meets the performance requirements.

In an example, the terminal device determines that the model corresponding to the second information processing mode does not meet the performance requirements through direct or indirect means, and the terminal device scrambles the uplink control signaling using a first scrambling mode. Upon receiving the uplink control signaling, the base station performs blind detection. If it is detected that the signaling has been scrambled using the first scrambling mode, it can be determined that the model corresponding to the second information processing mode does not meet the performance requirements. In an example, the terminal device determines that the model corresponding to the second information processing mode meets the performance requirements through direct or indirect means, and the terminal device scrambles the uplink control signaling using a second scrambling mode. Upon receiving the uplink control signaling, the base station performs blind detection. If it is detected that the signaling has been scrambled using the second scrambling mode, it can be determined that the model corresponding to the second information processing mode meets the performance requirements.

In an example, the terminal device determines that the model corresponding to the second information processing mode does not meet the performance requirements through direct or indirect means. The terminal device processes M pieces of beam parameter information through the second information processing mode to obtain N pieces of beam parameter information. Here, M pieces of beam parameter information correspond to a first beam set, N pieces of beam parameter information correspond to a second beam set, and the first beam set belongs to a subset of the second beam set. N pieces of beam parameter information are obtained through prediction by artificial intelligence using M pieces of beam parameter information. The beams corresponding to L pieces of beam parameter information are selected as the preferred beams, for example, by comparing the magnitudes of the N pieces of beam parameter information and selecting the beams corresponding to the largest L pieces of beam parameter information as the preferred beams. In an instance, the terminal device provides feedback in a CSI report that includes the indexes of the preferred beams, such as CRIs. These CRIs are derived from actually measured reference signals, meaning they are in the set of the M beams. The base station receives the CSI report and obtains the CRIs. By comparing the CRIs with the indexes of the beams with actual transmission, if the base station finds that all CRIs are within the set of beams with actual transmission, i.e., all have performed actual transmission, it is indicated that the model corresponding to the second information processing mode does not meet the performance requirements. Alternatively, in an example, if the proportion of the number of beam indexes within the set of M beams exceeds a threshold C3, it is determined that the model corresponding to the second information processing mode does not meet the performance requirements. In an example, when the terminal device determines that the model corresponding to the second information processing mode does not meet the performance requirements, the CRIs fed back are divided into two groups. One group provides the actually measured beam parameter information (such as L1-RSRP and L1-SINR), while the second group contains special values for each element, such as 0, a fixed negative number, a fixed integer, or a special combination of letters. Here, the number of elements in the first group of CRIs and the number of elements in the second group of CRIs are determined according to a predefined mode, or the first group of CRIs may include K elements, with the remainder being special values, or the second group of CRIs may include K elements, with the remainder being the actually measured beam parameter information. K is a positive integer, such as 1, or a predefined value. In some examples, CRI can be replaced with SSBRI.

In an example, the base station transmits a CSI report configuration through higher layer signaling and/or physical layer signaling, such as the higher layer signaling RRC, or using RRC signaling to configure CSI report configuration, then activating using physical layer signaling DCI, or transmitting or activating a CSI report through a combination of RRC, MAC CE, and DCI signaling. The terminal device receives the CSI report and processes the beam parameter information using the first information processing mode to obtain the first processing result, and processes the beam parameter information using the second information processing mode to obtain the second processing result. The first processing result includes beam parameter information corresponding to K1 beams, such as CRI and/or L1-RSRP, while the second processing result includes beam parameter information corresponding to K2 beams, such as CRI and/or L1-RSRP. In some examples, CRI can be replaced with SSBRI, and L1-RSRP can be replaced with L1-SINR. The terminal device transmits both the first processing result and the second processing result in the same CSI report. In some examples, the CRI of the first processing result and the CRI of the second processing result are exactly the same. In some examples, the CRI of the first processing result and the CRI of the second processing result have only C values that are the same, where C is less than or equal to K1, C is less than or equal to K2, and K1 and K2 are positive integers. The base station receives the CSI report fed back by the terminal device, and acquires the first processing result and the second processing result. In some examples, the terminal device repeatedly measures across multiple time slots to obtain the first measurement result and the second measurement result, and feeds back the first measurement result and the second measurement result of the multiple measurements in several CSI reports. The base station receives the CSI reports from multiple time points to obtain the first measurement results and the second measurement results at the multiple time points. In some examples, K1 and K2 are different integer values. In an example, the K1 first processing results consist of the largest K1 pieces of beam parameter information from the M pieces of beam parameter information, while the K2 second processing results consist of the largest K2 pieces of beam parameter information from the N pieces of predicted beam parameter information. In an example, the K1 first processing results are obtained by selecting K1 pieces of beam parameter information from the M pieces of beam parameter information at equal intervals in the horizontal and/or vertical direction, and the K2 second processing results are obtained by selecting K2 pieces of beam parameter information from the N pieces of predicted beam parameter information at equal intervals in the horizontal and/or vertical direction. In an example, the K1 first processing results are derived from K1 pieces of beam parameter information taken from the M pieces of beam parameter information based on predefined or configured indexes, and the K2 second processing results are derived from K2 pieces of beam parameter information taken from the N pieces of predicted beam parameter information based on predefined or configured indexes. In a feedback example, the terminal device feeds back the K1 processing results and the K2 processing results, and the base station receives, from the terminal device, the feedback of the K1 processing results and the K2 processing results. In a feedback example, the terminal device feeds back the K1 processing results and/or an indication of whether the K2 pieces of beam parameter information meets a first condition. The indication for the i-th beam parameter information satisfying the first condition means that the index CRI of the i-th beam parameter information is included in the CRI corresponding to the K1 processing results, or means that an absolute value of a difference between at least one L1-RSRP among the K1 L1-RSRP values in the K1 processing results and the L1-RSRP corresponding to the i-th beam parameter information is less than a db. a is a number greater than 0, such as 1, or 2, etc.

In an example, the base station sends M reference signal resources, and each reference signal resource corresponds to one beam. The terminal device receives the M reference signal resources and obtains M pieces of beam parameter information. The terminal device selects K pieces from the M pieces of beam parameter information to serve as input for the model corresponding to the second information processing mode, and outputs a set of beam parameter information, and then determines, through either direct or indirect means, whether the output set of beam parameter information meets the performance criteria of the model corresponding to the second information processing mode. If the performance criteria are met, the selected K beams are determined to be suitable for the beam set of the model corresponding to the second information processing mode. The terminal device feeds back the indexes of the K beams (such as CRI, SSBRI, etc.) through higher-layer and/or physical layer signaling or in a CSI report, and in some feedbacks, the terminal device may also feed back the L1-RSRP or L1-SINR corresponding to the K beam indexes. The base station receives the K beam indexes from the terminal device through higher layer and/or physical layer signaling, or from the CSI report, thereby obtaining the selected K CRIs, and will then use the reference signals corresponding to these K CRIs in the next transmission.

In some examples, the terminal device, in order to help the base station better send beam scanning reference signals, needs to provide feedback to the base station on the number of receive beams. The base station determines the number of reference signal resources for sending the receive beam scanning based on the number of receive beams reported by the terminal device.

In some examples, the terminal device obtains K groups of beam parameter information for K time slots through the second information processing mode, where each time slot corresponds to one group of beam parameter information. In the same CSI report, if there is another CSI, such as precoding-related CSI, the CSI report for the K groups of beam parameter information takes priority over the other CSI reports. In an example, the transmission content in the CSI report includes two coded blocks. In this case, the K1 groups of beam parameter information for time slots 1 to K1 are included in the first coded block, while the groups of beam parameter information from time slot K1+1 to K are included in the second coded block. For instance, if K1 = 1, then the beam parameter information for the first time slot is in the first coded block, and the beam parameter information for the remaining K-1 time slots is included in the second coded block.

It is to be noted that, in the embodiments above, the description of the embodiments has respective focuses. For a part that is not described in detail or recorded in an embodiment, refer to related descriptions in other embodiments.

Referring to FIG. 6, an embodiment of the present disclosure further provides a communication device 900, including but not limited to:
at least one processor 910; and
at least one memory 920 for storing at least one program, where
the at least one program, when executed by the at least one processor 910, causes the at least one processor 910 to perform the information sending method or the information receiving method as described in any of the above embodiments.

It is to be understood that the processor 910 and the memory 920 above may be connected by a bus or by other means.

It will be understood that the processor 910 may employ a central processing unit (CPU). The processor may also be a general-purpose processor, a digital signal processor (DSP), an application-specific integrated circuit (ASIC), a field programmable gate array (FPGA) or other programmable logic devices, discrete gate or transistor logic devices, discrete hardware components, etc. The general-purpose processor may be a microprocessor or the processor may be any conventional processor. Alternatively, the processor 910 uses one or more integrated circuits, and is configured to execute a related program to implement a technical scheme provided in the embodiments of the present disclosure.

As a non-transitory computer-readable storage medium, the memory 920 may be configured to store a non-transitory software program and a non-transitory computer-executable program, for example, the information processing method executed on the network device side described in any of the embodiments of the present disclosure. The processor 910 implements the information processing method described above by running a non-transitory software program and instructions stored in the memory 920.

The memory 920 may include a program storage area and a data storage area, where the program storage area may store an operating system and application program(s) required by at least one feature, and the data storage area may store data required for the execution of the information processing method described above. In addition, the memory 920 may include a high-speed random access memory and a non-transitory memory, for example, at least one magnetic disk storage device, a flash memory device, or another non-transitory solid-state storage device. In some implementations, the memory 920 may optionally include remote memories remotely located with respect to the processor 910, and these remote memories may be connected to the processor 910 via a network. Instances of the above-mentioned network include, but are not limited to, the Internet, an intranet, a local area network, a mobile communication network, and a combination thereof.

The non-transitory software program and the instructions required to implement the information processing method described above are stored in the memory 920, and when executed by at least one processor 910, cause the at least one processor to perform the information sending method or the information receiving method according to any of the embodiments of the present disclosure.

A further embodiment of the present disclosure provides a computer-readable storage medium storing an executable program which, when executed by a processor, causes the processor to implement the information sending method or the information receiving method as described in any of the above embodiments.

The computer storage medium of this embodiment of the present disclosure may be any combination of one or more computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device, or any combination thereof. More examples (non-exhaustive) of the computer-readable storage medium include: an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Herein, the computer-readable storage medium may be any tangible medium including or storing a program, and the program may be used by or used in combination with an instruction execution system, apparatus or device.

The computer-readable signal medium may include a data signal propagated in a baseband or propagated as a part of a carrier, and carry computer-readable program code. Such a propagated signal may take any of a variety of forms, including, but not limited to, an electro-magnetic signal, an optical signal, or any suitable combination thereof. The computer-readable signal medium may alternatively be any computer-readable storage medium other than the computer-readable medium. The computer-readable storage medium may send, propagate or transmit a program used by or used in combination with an instruction execution system, apparatus or device.

Program code embodied on a computer-readable medium may be transmitted using any appropriate medium, including but not limited to wireless, wireline, optical fiber cable, RF, etc., or any suitable combination of the foregoing.

Computer program code for executing the operations in the present disclosure may be compiled by using one or more program design languages or a combination thereof. The programming languages include object-oriented programming languages, such as Java, Smalltalk, and C++, and conventional procedural programming languages, such as C or similar programming languages. The program code may be executed fully on a user computer, executed partially on a user computer, executed as an independent software package, executed partially on a user computer and partially on a remote computer, or executed fully on a remote computer or a server. In the latter scenario involving a remote computer, the remote computer may be connected to the user computer through any type of network, including a local area network (LAN) or a wide area network (WAN), or the connection may be made to an external computer (for example, through the Internet using an Internet Service Provider).

An embodiment of the present disclosure further provides a computer program product storing program instructions which, when executed on a network device, cause the network device to implement the information sending method or the information receiving method as described in any of the above embodiments.

The above is a description of some embodiments of the present disclosure. However, the present disclosure is not limited to the above-mentioned embodiments. Those of ordinary skill in the art can also make various equivalent modifications or replacements without departing from the range of the present disclosure, and these equivalent modifications or replacements are all included in the scope defined by the present disclosure.

## Claims

1. An information sending method, which is applied to a first communication device, the method comprising:
acquiring M pieces of first-type channel state information, and determining N pieces of second-type channel state information according to the M pieces of first-type channel state information;
generating a channel state information report, the channel state information report comprising at least one of: L1 pieces of first-type channel state information, or L2 pieces of second-type channel state information, wherein the L1 pieces of first-type channel state information are determined according to the M pieces of first-type channel state information, the L2 pieces of second-type channel state information are determined according to the N pieces of second-type channel state information, where L1, L2, N, and M are positive integers, L1 is less than or equal to M, and L2 is less than or equal to N; and
sending the channel state information report.

2. The method of claim 1, wherein the M pieces of first-type channel state information correspond to a first reference signal resource set; and the N pieces of second-type channel state information correspond to a second reference signal resource set.

3. The method of claim 1, wherein the channel state information report comprises a first field for indicating a channel state information type, wherein the channel state information type comprises first-type channel state information and second-type channel state information.

4. The method of claim 3, wherein
the first field taking a first value A1 indicates that the channel state information in the channel state information report is the first-type channel state information; or
the first field taking a second value A2 indicates that the channel state information in the channel state information report is the second-type channel state information.

5. The method of claim 1, wherein
the channel state information report comprises a second field for sending K confidence levels; or
the L2 pieces of second-type channel state information comprise K confidence levels, K being an integer not greater than L2.

6. The method of claim 5, wherein the K confidence levels are used to determine a channel state information type and/or a performance indicator.

7. The method of claim 1, wherein the channel state information report comprises a third field for sending the number of reference signal resource indexes having the same values in the L2 pieces of second-type channel state information and the M pieces of first-type channel state information.

8. The method of claim 1, further comprising:
dividing a transmission resource corresponding to first channel state information into a first sub-transmission resource and a second sub-transmission resource; and
transmitting a performance indicator on the first sub-transmission resource, and/or transmitting the first channel state information on the second sub-transmission resource.

9. The method of claim 8, wherein the first channel state information comprises one of:
the channel state information with the smallest value or the smallest confidence level among the L1 pieces of first-type channel state information;
the channel state information with the smallest value or the smallest confidence level among the L2 pieces of second-type channel state information; or
the channel state information with the smallest value or the smallest confidence level among the L1 pieces of first-type channel state information and the L2 pieces of second-type channel state information.

10. The method of claim 1, wherein L1 and L2 are positive integers, and L1 is not equal to L2.

11. The method of claim 1, further comprising: selecting the L1 pieces of first channel state information and the L2 pieces of second channel state information based on a first rule.

12. The method of claim 1, wherein the channel state information report comprises second indication information, wherein the second indication information is obtained by one of:
determining the second indication information according to resource indexes corresponding to the L1 pieces of first-type channel state information and the L2 pieces of second-type channel state information;
or
determining the second indication information according to resource metric parameters corresponding to the L1 pieces of first-type channel state information and the L2 pieces of second-type channel state information.

13. The method of claim 1, wherein the L2 pieces of second-type channel state information are R groups of second-type channel state information, wherein the R groups of second-type channel state information correspond to R time slots, R being an integer greater than 1 and less than or equal to L2.

14. The method of claim 1, wherein the L2 pieces of second-type channel state information are R groups of second-type channel state information, wherein the R groups of second-type channel state information correspond to R coded blocks, R being an integer greater than 1 and less than or equal to L2.

15. The method of claim 13 or 14, further comprising: adjusting the priority of the channel state information report.

16. The method of claim 1, further comprising: determining M reference signal resource indexes among N reference signal resource indexes, and transmitting the M reference signal resource indexes in the channel state information report.

17. The method of claim 1, further comprising: also sending the number of retransmissions of a reference signal resource or the number of receive beams in the channel state information report.

18. An information receiving method, which is applied to a second communication device, the method comprising:
receiving a channel state information report, the channel state information report comprising at least one of: L1 pieces of first-type channel state information, or L2 pieces of second-type channel state information;
wherein the L1 pieces of first-type channel state information are determined according to M pieces of first-type channel state information;
the L2 pieces of second-type channel state information are determined according to N pieces of second-type channel state information, and the N pieces of second-type channel state information are determined according to the M pieces of first-type channel state information; and
L1, L2, N, and M are positive integers, L1 is less than or equal to M, and L2 is less than or equal to N.

19. The method of claim 18, wherein the channel state information report comprises a first field for indicating a channel state information type, wherein the channel state information type comprises first-type channel state information and second-type channel state information.

20. The method of claim 19, wherein
the first field taking a first value A1 indicates that the channel state information transmitted in the channel state information report is the first-type channel state information; or
the first field taking a second value A2 indicates that the channel state information transmitted in the channel state information report is the second-type channel state information.

21. The method of claim 20, wherein the channel state information report comprises a second field, and K confidence levels are received according to the second field; or the L2 pieces of second-type channel state information comprise K confidence levels, K being an integer not greater than L2.

22. The method of claim 21, wherein determining a channel state information type and/or a model performance indicator according to the K confidence levels.

23. The method of claim 18, wherein the channel state information report comprises a third field, according to which the number of reference signal resource indexes having the same values in the L2 pieces of second-type channel state information and the M pieces of first-type channel state information is received.

24. The method of claim 18, wherein the transmission resource corresponding to the first channel state information in the channel state information report comprises a first transmission sub-resource and a second transmission sub-resource, and a performance indicator is received according to the first transmission sub-resource, and/or the first channel state information is received according to the second transmission sub-resource.

25. The method of claim 24, wherein the first channel state information comprises one of:
the channel state information with the smallest value among the L1 pieces of first-type channel state information;
the channel state information with the smallest value among the L2 pieces of second-type channel state information; or
the channel state information with the smallest value among the L1 pieces of first-type channel state information and the L2 pieces of second-type channel state information.

26. The method of claim 18, wherein L1 and L2 are positive integers, and L1 is not equal to L2.

27. The method of claim 18, wherein the channel state information report comprises second indication information, wherein the second indication information is obtained by one of:
determining the second indication information according to resource indexes corresponding to the L1 pieces of first-type channel state information and the L2 pieces of second-type channel state information;
or
determining the second indication information according to resource metric parameters corresponding to the L1 pieces of first-type channel state information and the L2 pieces of second-type channel state information.

28. The method of claim 18, wherein the L2 pieces of second-type channel state information are R groups of second-type channel state information, wherein the R groups of second-type channel state information correspond to R time slots, R being an integer greater than 1 and less than or equal to L2.

29. The method of claim 18, wherein the L2 pieces of second-type channel state information are R groups of second-type channel state information, wherein the R groups of second-type channel state information correspond to R coded blocks, R being an integer greater than 1 and less than or equal to L2.

30. The method of claim 18, wherein M reference signal resource indexes are received according to the channel state information report, wherein the M reference signal resource indexes are based on N reference signal resource indexes.

31. The method of claim 18, wherein receiving the number of retransmissions of a reference signal resource or the number of receive beams according to the channel state information report.

32. A communication device, comprising:
at least one processor; and
at least one memory for storing at least one program, wherein
the at least one program, when executed by the at least one processor, causes the at least one processor to implement the information sending method of any one of claims 1 to 17, or the information receiving method of any one of claims 18 to 31.

33. A computer-readable storage medium storing an executable program which, when executed by a processor, causes the processor to implement the information sending method of any one of claims 1 to 17, or the information receiving method of any one of claims 18 to 31.

34. A computer program product, comprising a computer program or computer instructions stored in a computer-readable storage medium, from which a processor of a computer device reads the computer program or the computer instructions, wherein the computer program or the computer instructions, when executed by the processor, cause the computer device to perform the information sending method of any one of claims 1 to 17, or the information receiving method of any one of claims 18 to 31.
